# EUROPÄISCHE PATENTSCHRIFT

(11) **EP 0 602 103 B1**
(45) Veröffentlichungstag und Bekanntmachung des Hinweises auf die Patenterteilung: **07.05.1997**
(21) Anmeldenummer: 92918370.5
(22) Anmeldetag: 22.08.1992
(51) Int. Cl.: H04N 13/00

(54) **3D-KAMERA ZUR STEREOSKOPISCHEN AUFNAHME**
3D-CAMERA FOR STEREOSCOPIC IMAGING
CAMERA EN 3D POUR PRISE DE VUE STEREOSCOPIQUE

(30) Priorität: 05.09.1991 DE 4129510
(43) Veröffentlichungstag der Anmeldung: 22.06.1994
(73) Patentinhaber: Forschungszentrum Karlsruhe GmbH, 76133 Karlsruhe (DE)
(72) Erfinder: BECKER, Heinz-Martin, D-7520 Bruchsal 3 (DE)
(74) Vertreter: Gottlob, Peter, Dipl. Ing.
(86) Internationale Anmeldenummer: DE9200710
(87) Internationale Veröffentlichungsnummer: WO9305620

(56) Entgegenhaltungen:
- EP-A- 0 146 476
- EP-A- 0 242 481
- EP-A- 0 264 057
- INFORMATION DISPLAY Bd. 5, Nr. 7/8, August 1989, NEW YORK, US Seiten 20 - 23 , XP000068419 FULLER ET AL 'STEREOSCOPIC VIDEO DISPLAY SYSTEMS'
- NUCLEAR ENGINEERING INTERNATIONAL Bd. 35, Nr. 436, November 1990, SUTTON,SURREY,GB pages 44-45, XP000172588 DUMBRECK ET AL "3D TV -LOOKING FORWARD IN DEPTH"
- PROCEEDINGS OF THE I.E.E.E. Bd. 76, Nr. 8, August 1988, NEW YORK, NY, USA Seiten 996 - 1005 , XP000098389 R. BAJCSY 'ACTIVE PERCEPTION'

## Beschreibung

Die Erfindung betrifft eine 3D-Kamera zur stereoskopischen Aufnahme eines Raumausschnitts einer Szene.

Bei derartigen Kameras soll dem Betrachter ein räumlicher Eindruck von einer Umgebung vermittelt werden, die angeschaut, überwacht oder in der gar fernbedient manipuliert werden soll.

Wie beim gewöhnlichen Aufnehmen oder Filmen einer Umgebung muß dabei die Entfernung eingestellt bzw. auf einen Gegenstand darin fokussiert werden. Hinzu kommt beim dreidimensionalen Aufnehmen die Einstellung des Schielwinkels zwischen den beiden Kameras. Untersuchungen zum menschlichen Sehvermögen zeigen, daß das räumliche Sehvermögen ungleich ausgeprägt ist. Das wird schon dadurch verständlich, wenn man daran denkt, daß das Sehvermögen beider Augen im allgemeinen unterschiedlich ist. D. h. neben einer sozusagen objektiven Kameraeinstellung ist noch eine personenbezogene, individuelle oder auch subjektive Einstellung vonnöten. Ein umfangreicherer Bedien- oder Einstellaufwand muß bei einer konventionellen, tastengesteuerten 3D-Kamera vorgenommen werden, um räumliches Betrachten beim Durchfahren des Raumes Abschnitt für Abschnitt zu vermitteln.

Eine Art stereoskopische Abbildung wird in der DE-C-35 33 379 vorgestellt. Das Prinzip besteht in der Aufnahme zweier Einzelbilder, die auf konforme Darstellung gebracht werden. Die sogenannte Stereo-Basis existiert nicht stationär, sondern wird durch Überflug als zeitabhängige lokale Veränderung erzeugt. Diese Methode kommt dem Sterovermessungsverfahren nahe, wobei eine Tiefenwahrnehmung infolge der totalen Plastik besteht. Dabei steckt nur im Überlappungsbereich beider Einzelbilder die Bildinformation. Wegen des fehlenden Schielwinkels und des Außerachtlassens der 3 D- relevanten Größen wie Randflächen und Verzerrung ist mit diesem Verfahren nur ein Plastik-Effekt erzeugbar.

In dem Konferenzbericht "ANS Third Topical Meeting on Robotics and Remote Systems, Charleston, March 13-16, 1989" ist unter dem Titel "3-D-TV: Evaluations And Lessons Learned" von A. A. Dumbreck et al. ein Aufsatz über das räumliche Sehen, eine 3D-Kamera als auch das Fernhantieren mit einer solchen abgefaßt. Darin tritt zutage, welcher Bedienaufwand zeitlicher Natur insbesondere durch eine Person aufzubringen ist, die ein solches 3D-Kamerasystem führt und durch dieses beobachtet. Dieser Aufwand tritt schon alleine bei ortsfester Installation einer solchen Kamera auf, wie durch die Schneideversuche an Eisenträgern hervortritt. Die gleichzeitige Betrachtung zweier mit Polarisationsfiltern auf der Mattscheibe versehener Monitore durch eine Brille mit polarisierten Glässern schränkt weiterhin den Bewegungsspielraum der betrachtenden Person erheblich ein. Insgesamt jedoch kristallisieren sich die Vorteile des dreidimensionalen Sehens und insbesondere des fernbedienenden Manipulators mit Hilfe einer 3D-Kamera heraus.

Nächstkommender Stand der Technik ist der Übersichtsartikel "Stereoscopic Video Display Systems" in der Zeitschrift "Information Display", Bd. 5, Nr. 7/8, August 1989, New York, US, Seiten 20-23. Er offenbart die klassischen Methoden der stereoskopischen Bildwiedergabe mittels elektrooptischer oder LCD-Shutterbrillen (TOSHIBA). Das durch das Zwischenzeilenverfahren zweier Bilder erzeugte Flimmern wird durch 120 Hz Wiedergabe vermieden (TEKTRONIX, STEREOGRAPHICS). ZSCREEN verwendet kabellose Shutterbrillen. 3D IMAGE TEK verwendet auf dem Kopf angebrachte Displays. ARD Corp. verwendet für telerobotische Anwendungen einen PC-gestützten Mechanismus, welcher die biokularen Disparitäten (Parallaxe) ausgleicht, eine Sprachsteuerung aufweist und benutzer- und kursorgesteuert Zoom, Focus, Schwenk- und Kippbewegungen justiert. Dazu werden Bilder zweier RBG-Monitore mit halbverspiegeltem Spiegel überlagert. Der Operator justiert Stereobildparameter wie die o.g. biokularen Disparitäten, die Anpassung des Kamerabildes an ein Monitorbild, dessen Größe subjektiv als bestimmt wird. Ergonomisch berücksichtigte Faktoren sind der Augenabstand und daß beide stereoskopischen Kameras in der gleichen horizontalen Ebene angeordnet sind. Eine automatische Konvergenzsteuerung ist ebenfalls vorhanden. Letztendlich zeigt dieses Dokument Merkmale wie Focus, Zoom, Spacheingabe und den Augenabstand als "Adaption an den Sehapparat des Betrachters".

EP-A-0 264 157 (FUJITSU,'86) offenbart ein Autofokussystem für zweidimensionale, gedruckte Schaltungen. Es wird ein Algorithmus zum Abstasten der Oberfläche der Schaltung durch ein feinmaschiges Netz aus im Dreieck miteinanderverbunden Rastenpunktenbestehend offenbart.

Die Zeitschrift "Nuclear Engineering International" Bd. 35, Nr. 436, November 1990, GB, Seiten 44-45 offenbart in einer 3D-Kamera klassische Polarisationsfilter und halbdurchlässige Spiegel sowie Features wie Zoom, Blende unter Benutzersteuerung und Focus, Konvergenz unter Computersteuerung.

EP-A-0 146 476 (THOMSON-CSF) offenbart eine 3D-Kamera worin die Änderung der Kameraabstandes zwischen beiden stereoskopischen Kameras und die Änderung des Schielwinkels (=Parallaxe) und der Konvergenz im Fall von Zoom(Tele)aufnahmen.
Proc. IEEE, Bd. 76, Nr. 8, August 1988, New York, NY, US, Seiten 996-1005 offenbart den theoretischen Zugang zum "aktiven Wahrnehmen" in Abhängigkeit von dem Betrachtungsgegenstand (Form, Struktur etc.) zum Zwecke der Objekterkennung.

EP-A-0 242 481 (THE BABCOCK & WILCOX) offenbart die Erzeugung und Wiedergabe eines holographischen Bildes, wobei die Steuerung über Spracheingabe und Keyboard erfolgt. Die Erfindung betrifft eine 3D-Kamera.

Der Erfindung liegt die Aufgabe zugrunde, daß bei einer stereoskopischen Aufnahme in einer zu durchfahrenden Szene und der Fernhantierung darin eine 3D-Kamera über den gesamten nutzbaren optischen Bereich hinweg kontinuierlich und nicht belastend vom jeweiligen Betrachter geführt werden kann.

Diese Aufgabe wird erfindungsgemäß durch die kennzeichnenden Merkmale des Anspruchs 1 gelöst. Genau vorhersehbare Einstellungsmaßnahmen können mit Rechnerhilfe automatisch durchgeführt werden. Hierzu werden mehrere relevante Stützpunkte aus der Szene abgelegt. Über einen Interpolations-Algorithmus wird daraus die personenbezogene Fahrt definiert. Optische, optomechanische, mechanische Abweichungen, Fehler am Sehapparat und subjektive negative Seheindrücke werden durch den Rechner berücksichtigt bzw. bei Einstellmaßnahmen eben für die betrachtende und bedienende Person individuell gewichtet. Diese Maßnahmen sind einmalig und erfolgen dediziert auf die verwendete Kameraeinheit und den Betrachter und stellen das Presetting dar.

Die verbleibenden Einstellmaßnahmen durch die bedienende Person beschränken sich nur noch auf wenige, die noch während der Fahrt anfallen. Die Möglichkeit der Eingabeart ist einerseits über spezielle Tastendrücke auf einem Eingabebett, andererseits bietet sich gerade hier die vokale Eingabeart an wie etwa "NAH", "FERN" oder "STOP". Der Vorteil ist der folgende: Es bleibt für die Betrachtung des Raumausschnitts, der Fahrt durch die Szene und das fernbediente Hantieren die nahezu volle Aufmerksamkeit übrig.

Die kennzeichnenden Merkmale bergen durch die Adaption an ein Individium natürlich auch die Möglichkeit in sich, die subjektiven Einstelldaten an einem idealen, d. h. Durchschnittsmenschen, zu orientieren.

Kommt das in der DE-C-38 08 969 beschriebene 3D-Fernsehsystem zum Einsatz, so ist die Bewegungsfreiheit der Bedienperson nahezu unbeschränkt im Gegensatz zu lichtpolarisierenden Baugruppen im 3D-Wiedergabesystem.

Ein Ausführungsbeispiel der Erfindung ist in der Zeichnung dargestellt und wird im folgenden näher beschrieben. Es zeigen:
Figur 1:
   Ablaufschema der automatisierten 3D-Kamera;
Figur 2:
   Konventioneller, stark interaktiv ausgeprägter Ablauf;
Figur 3:
   Komplettes 3D-Video System (automatische Aufnahme und Wiedergabe).

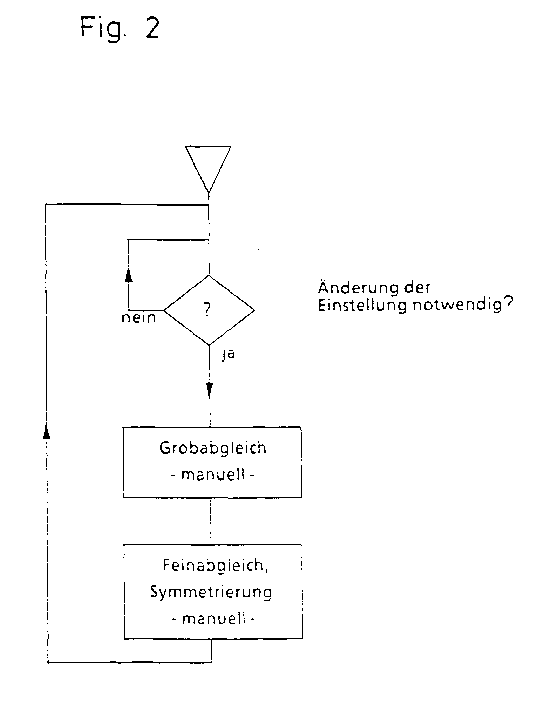

Der herkömmliche Vorgang beim Sehen durch ein und Einstellen eines 3D-Kamerasystems, wie in dem o. e. Konferenzbericht beschrieben, ist rein manuell. Dabei ist das Kamerasystem häufig ortsfest. Fokussieren und Einstellen auf Entfernung hängen sehr eng zusammen. Zur Vereinfachung dieser Einstellvorgänge sind die beiden Einstellvorrichtungen dazu entsprechend mechanisch gekoppelt. Eine unabhängige Einstellvorrichtung ist für den Schielwinkel der beiden Objektivachsen an den Kameras. Nach der manuellen Grobeinstellung, etwa vergleichbar einem Suchvorgang, erfolgt die manuelle Feineinstellung. In diesen objektiven Einstellvorgängen kommt dann noch ein subjektiver Einstellvorgang hinzu, nämlich die Adaption an die Sehfähigkeit des Betrachters. Zur objektiven und subjektiven, manuellen Einstellung ist in Figur 2 ein Ablaufdiagramm dargestellt, durch das der zeitliche Aufwand zum Ausdruck kommt.

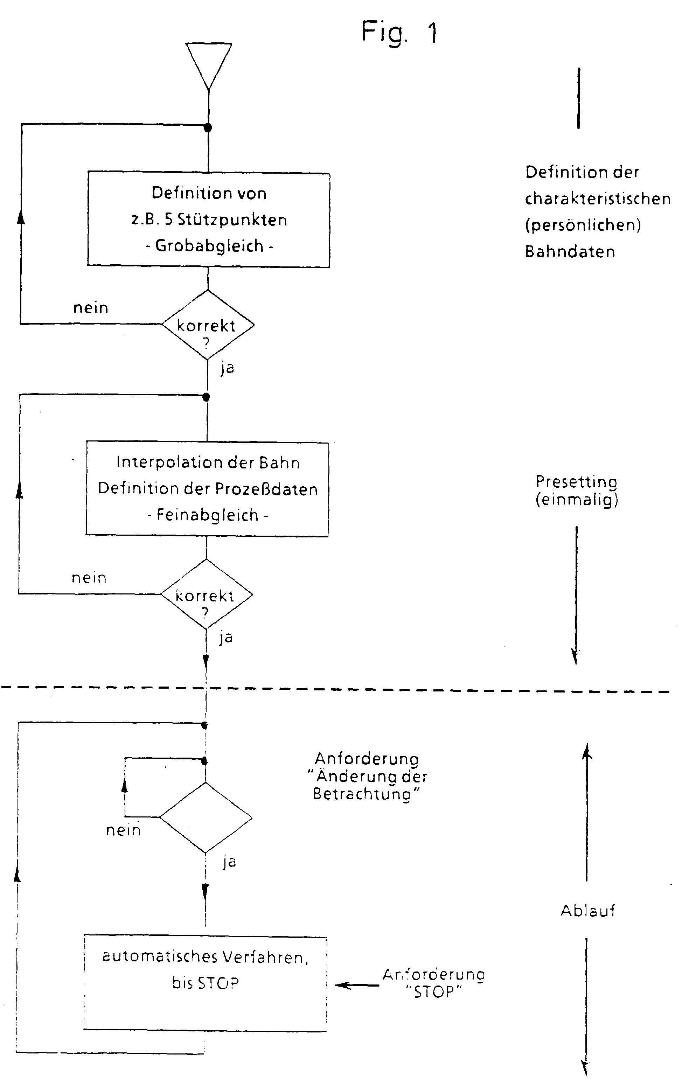

In Figur 1 ist der hybride, also der weitgehend automatisierte und verbliebene manuelle Einstellungsablauf ebenfalls in Form eines Flußdiagramms dargestellt.

Die rechnergestützte Einstellung der 3D-Kamera läßt sich zunächst in zwei größere Blöcke unterteilen. Da ist zum einen die Einmaleingabe von Stützpunkten der Szene, hier im Durchführungsbeispiel sind es fünf, mit denen der Algorithmus des Bewegungsablaufs in der Szene konkretisiert wird. Dies betrifft objektive Dinge. Weiter werden die individuellen, wichtigen Sehwerte der bedienenden Person also die personenbezogenen Daten zur Einstellungsgewichtung eingegeben. Diese Vorgänge stellen das Presetting dar.

Zum andern ist da der Block, in dem die unvermeidlichen, nicht zu automatisierenden Einstellungen unmittelbar durch die Bedienperson zum maßgebenden Zeitpunkt während der Fahrt durch die Szene zu erfolgen hat. Diese Möglichkeit muß zum Beobachten und Fernhantieren gegeben sein.

Der automatische, stereoskopische Aufnahme- und Betrachtungsvorgang läuft folgendermaßen ab: Von der zu betrachtenden und zu durchfahrenden Szene sind mehrere räumliche Stützpunkte in den Rechner abgespeichert, mit deren Hilfe dann eine Voreinstellung, das Presetting, erfolgt. Der Einstellalgorithmus wird dadurch konkretisiert und die Einstellung ständig aktualisiert, angepaßt, soweit notwendig. Das ist ein objektiver Vorgang, der jedoch auf das Sehvermögen der Bedienperson abgestimmt sein muß. Hierzu werden die wichtigen individuellen personenbezogenen Sehwerte ebenfalls abgespeichert, um die objektiven Einstellwerte bei der Interpolation zwischen den Stützpunkten zu gewichten. Die Bedienperson ist dadurch von diesen Aufgaben entbunden. Durch die Möglichkeit der Spracheingabe von Einstellbefehlen, die nach Bedarf für die genaue Beobachtung und das exakte Fernhantieren ständig gemacht werden können, kann die Konzentration darauf jetzt entfallen. Das kommt dem eigentlichen Vorhaben entgegen. Die vokale Befehlseingabe ist etwa derart: SCHARF, WEITER, NAH, STOP, FAHRT, mit Schwenk-Neige-Kopf: OBEN, UNTEN, RECHTS, LINKS.

Die visuelle Kontrolle des Raumausschnitts in der Szene kann jetzt nahezu unbewußt ablaufen und die Gesamtarbeitsleistung der Person kaum noch beanspruchen. Die automatische Fahrt erfolgt unbelastet und auf die Person abgestimmt. Dabei erzwingt die Möglichkeit zur individuellen Sehsymmetrierung im Rahmen zulässiger Grenzen keine Begrenzung der technischen Komponenten.

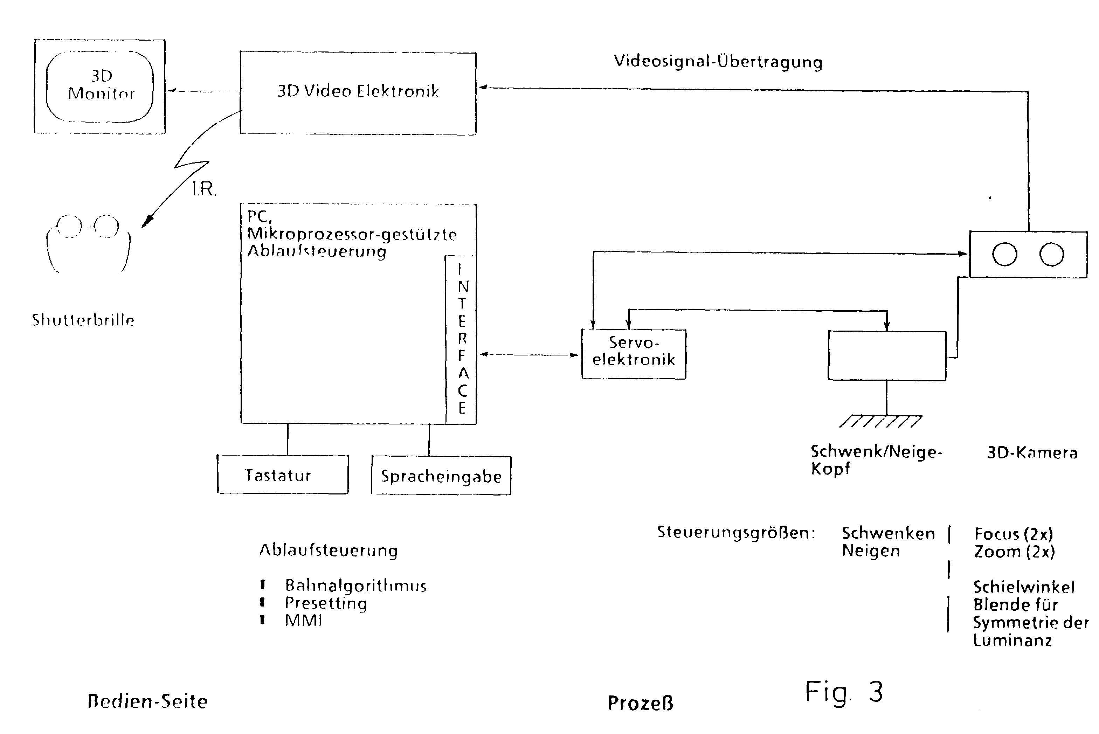

Den blockförmigen Aufbau der 3D-Kamera zeigt Figur 3. Als 3D-Kameraeinheit dienen zwei marktgängige Kameras, an die keine gesonderten technischen Ansprüche gestellt sind. Der Blockaufbau ist zweckmäßig in drei Bereiche unterteilt:
- Bedienelemente, Spracheingabe, Tastatur, Monitor;
- Rechner hier in Form eines Personal-Computers, PC;
- für den Einstellprozeß die Servoelektronik, Einstellapparatur und die 3D-Kameraeinheit.

Das Presetting mit der Eingabe individueller, personenbezogener Sehdaten erfolgt über die Tastatur. Die Personeneinstellanweisung über das Mikrophon z. B. aber auch über die Tastatur. Am Monitor wird der gerade aufgenommene Raumausschnitt durch eine Shutterbrille etwa wie in o. e. PS 38 08 969 beschrieben, betrachtet. Die Ablaufsteuerung wird im PC gelenkt. Die Einstellbefehle gehen von dort dann durch vorzugsweise serielle Übertragung an die Servoelektronik, die die Signalpegel auf die Stellapparatur bzw. Motoren abstimmt. Die notwendigen Einstellungen am jeweiligen Kameraobjektiv, Blende und Neigung der Kameras zueinander, sowie das Kippen und Schwenken der 3D-Kameraeinheit werden dadurch schließlich bewirkt, sei es automatisch oder durch Personenanweisung.

Die 3D-Kamera ist ein Zusammenbau aus marktüblichen Baugruppen der Fernsehelektronik, Datenverarbeitung und Signalelektronik.

Das Presetting mit der personenbezogene Dateneingabe ermöglicht eine Kompensation aller objektiven und subjektiven Fehler im Rahmen technischer Grenzen.

Die Aufforderung zur Bewegung über die ergonomisch adaptive Spracheingabe schränkt taktil gesteuerte Handhabung nicht mehr ein. Reine Inspektionsarbeiten mit der 3D-Kamera erleiden eine Zeitverzug, der allerdings nur durch mechanische Systemgrößen und die maximal zulässige Geschwindigkeit für visuelle Verfolgung beschränkt werden bzw. wird, nicht durch die Bedienung.

## Patentansprüche

1. 3D-Kamera zur stereoskopischen Aufnahme einer Szene und Wiedergabe mit stereoskopischem Eindruck für einen Betrachter, bei dem die ortsrelevanten Größen wie Fokus, Zoom und der distanzabhängige Winkel zwischen der jeweiligen optischen Achse der beiden Kameras, der Schielwinkel, für jeden Szenenabschnitt oder Beobachtungspunkt eingestellt wird,
dadurch gekennzeichnet, daß
ein Rechner die Fahrt der 3D-Kamera durch die Szene steuert, der die Ortsparameter verarbeitet und Steuersignale an die Antriebe von Fokus, Zoom und Schielwinkel ausgibt und die Position der Antriebe regelt;
wesentliche Steuerfunktionen der betreffenden Prozeßgröße in einen Algorithmus für den Rechner gefaßt sind, der die Adaption der 3D-Kamera an den Sehapparat des Betrachters durchführt, so daß der Betrachter bei der Wiedergabe der aufgenommenen Szene einen wirlichkeitsgetreuen Eindruck wie bei einer direkten dynamischen Betrachtung empfindet;
der Rechner die Fehlertoleranzen der optischen, optomechanischen und mechanischen Komponenten der Aufnahmeeinheit und die individuell ausgeprägten Fehler des Sehapparates des Betrachters für die Einstellung des 3D-Kamera-Systems zum Durchfahren der Szene mit einbezieht;
der Rechner über die Eingabe von Stützpunkten Basisdaten für eine zu fahrende Fahrstrecke erzeugt und mit den individuellen Daten des Beobachters über Fokus, Zoom und Schielwinkel eine Grundeinstellung (presetting) bereit hält, die ohne Zutun des Beobachters (automatisch) für diesen eine passive, belastungsfreie, räumliche Beobachtung der durchzufahrenden Szene ermöglicht;
in dem Rechner der Datensatz eines Betrachters oder der Datensatz, der aus den Daten mehrerer Betrachter gemittelt wurde, vorliegt, so daß der momentane Betrachter über eine minimale Befehlseingabe, wie Spracheingabe oder Eingabe über eine Tastatur oder Eingabe über einen Steuerknüppel, den Ablauf der Fahrt zum Zwecke des individuellen Betrachtungsbedürfnisses beeinflussen kann und dennoch ein kontinuierliches Fahren durch die Szene besteht.

2. 3D-Kamera-System nach Anspruch 1, dadurch gekennzeichnet, daß die minimale Befehlseingabe akustisch erfolgt.

3. 3D-Kamera-System nach Anspruch 2 und 3, dadurch gekennzeichnet, daß der personenbezogene Datensatz für die gewichtete Einstellung ein statistisch ermittelter und gemittelter Datensatz über einen Menschen mittlerer Eigenschaft ist.

4. 3D-Kamera-System nach Anspruch 4, dadurch gekennzeichnet, daß die Kamera auf einen Schwenk-Neige-Kopf montiert ist und diese Koordinaten mit in die Fahrt integriert werden, womit die Befehle: "OBEN", "UNTEN", "RECHTS", "LINKS" umsetzbar sind.

## Claims

1. 3D-camera for the stereoscopic shooting of a scene and reproduction with a stereoscopic impression for an observer, wherein the parameters relevant to the location, such as focus, zoom and the distance-dependent angle between the particular optical axis of the two cameras, the squint angle, are set for each scene portion or observation point,
characterised in that
a computer controls the motion of the 3D-camera through the scene, processes the location parameters, issues control signals to the drives for the focus, zoom and squint angle and regulates the position of the drives;
essential control functions of the pertinent process parameter are put into an algorithm for the computer which effects the adaptation of the 3D-camera to the viewing apparatus of the observer, so that the observer has an impression as true to reality upon the reproduction of the photographed scene as with a direct dynamic observation;
the computer includes the error tolerances of the optical, optomechanical and mechanical components of the picture-taking unit and the individually defined errors of the viewing apparatus of the observer for the adjustment of the 3D-camera system for moving through the scene;
the computer produces basic data for a travel path to be travelled via the input of restart points and provides a basic adjustment (presetting) with the individual data of the observer concerning focus, zoom and squint angle to render possible a passive, load-free, three-dimensional observation of the scene to be run through for the observer without any involvement of the observer (automatically); and
the set of data of an observer, or the set of data which was averaged from the data of a plurality of observers, is in the computer, so that the actual viewer can influence the course of the motion for the purpose of the requirement to view individually via a minimum command input, such as speech input or input via a keyboard or input via a control stick, yet there is nevertheless a continuous run through the scene.

2. 3D-camera system according to claim 1, characterised in that the minimum command input is effected acoustically.

3. 3D-camera system according to claims 1 and 2, characterised in that the set of data relating to persons for the calibrated adjustment is a statistically determined and averaged set of data concerning a person of average characteristics.

4. 3D-camera system according to claim 3, characterised in that the camera is mounted on a pan-and-tilt head, and this co-ordination is jointly incorporated in the motion, with which the commands: "UP", "DOWN", "RIGHT" and "LEFT" are transposable.

## Revendications

1. Caméra 3D pour la prise de vues stéréoscopique d'une scène et d'une reproduction avec impression stéréoscopique pour l'observateur, les grandeurs concernant le lieu telles que la mise au point, le zoom et l'angle dépendant de la distance entre l'axe respectif de l'objectif des deux caméras, l'angle de vue, était réglée pour chaque tranche de scène ou chaque observation,
caractérisée en ce qu'
un calculateur commande le déplacement de la caméra 3D à travers la scène, il traite les paramètres locaux et règle les signaux de commande pour l'entraînement servant à la mise au point au zoom ou à l'angle de vue et la position des moyens d'entraînement ;
les fonctions de commande essentielles des grandeurs de procédé concernées sont prises dans un algorithme pour le calculateur qui exécute l'adaptation de la caméra 3D à l'appareil de vision de l'observateur pour qu' en cas de reproduction de la scène à enregistrer, l'observateur perçoive une impression fidèle comme pour une vision dynamique directe ;
le calculateur intègre des tolérances de défaut des composants optiques optomécaniques et mécaniques de l'unité de prise de vue et les défauts impliqués individuellement de l'appareil de vue de l'observateur pour régler la caméra 3D pour le parcours de la scène ;
le calculateur, par introduction des points d'appui génère les bases de données pour un trajet à parcourir et avec les données individuelles de l'observateur, par mise au point, et angle de vue, il prépare un réglage de base (preseting) qui se fait sans l'intervention de l'observateur (automatiquement) lui permettant une observation spatiale passive, sans contrainte de la scène à parcourir ;
le calculateur contient le jeu de données d'un observateur ou le jeu de données moyen provenant des données de plusieurs observateurs pour que l'observateur réel puisse, par une entrée de commande minimale, par exemple une commande vocale ou une commande par clavier ou à l'aide d'une manette de commande, commander le déplacement pour tenir compte de l'influence des exigences d'observation individuelles et néanmoins parcourir la scène en continu.

2. Système de caméra 3D selon la revendication 1,
caractérisé en ce que
l'entrée minimale des commandes se fait de manière acoustique.

3. Système de caméra 3D selon la revendication 2 ou 3,
caractérisé en ce que
le jeu de données rapporté aux personnes pour le réglage pondéré est un jeu de données obtenu statistiquement et dont on a fait la moyenne, pour une personne humaine ayant des caractéristiques moyennes.

4. Système de caméra 3D selon la revendication 4,
caractérisé en ce que
la caméra est montée et les coordonnées sont intégrées dans le déplacement avec des ordres « HAUT », « BAS », « DROITE », « GAUCHE ».
